Europäisches Patentamt

(19) **European Patent Office** (11) Publication number: **0 105 252**

Office européen des brevets **B1**

(12) **EUROPEAN PATENT SPECIFICATION**

(45) Date of publication of patent specification: **25.02.87** (51) Int. Cl.⁴: **B 60 R 7/04**

(21) Application number: **82901390.3**

(22) Date of filing: **26.03.82**

(86) International application number:
**PCT/US82/00372**

(87) International publication number:
**WO 83/03392 13.10.83 Gazette 83/24**

(54) **FLOOR CONSOLE WITH LATCHABLE SLIDING TRAY.**

<table>
<tr><td>

(43) Date of publication of application:
**18.04.84 Bulletin 84/16**

(45) Publication of the grant of the patent:
**25.02.87 Bulletin 87/09**

(84) Designated Contracting States:
**DE FR GB**

(56) References cited:
**US-A-3 163 287
US-A-3 215 467
US-A-3 356 409
US-A-3 497 076
US-A-3 561 589
US-A-3 804 233
US-A-4 146 159
US-A-4 262 962**

</td><td>

(73) Proprietor: **FORD FRANCE SOCIETE ANONYME
344 Avenue Napoléon Bonaparte B.P. 307
F-92506 Rueil Malmaison Cedex (FR)**
㊱ **FR**

(73) Proprietor: **FORD MOTOR COMPANY LIMITED
Eagle Way
Brentwood Essex CM13 3BW (GB)**
㊱ **GB**

(73) Proprietor: **FORD-WERKE
AKTIENGESELLSCHAFT
Ottoplatz 2 Postfach 21 03 69
D-5000 Köln 21 (DE)**
㊱ **DE**

(72) Inventor: **KATHIRIA, Shabbir A.
38340 Cottonwood Drive
Sterling Heights, MI 48077 (US)**

(74) Representative: **Messulam, Alec Moses et al
A. Messulam & Co. 24 Broadway
Leigh on Sea Essex SS9 1BN (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

The present invention relates generally to floor consoles for automobiles and more particularly to such consoles including article-carrying trays and to the mounting of such trays in automobile passenger compartments.

It is well known in the automobile body arts to provide for the mounting of trays or other receptacles in the passenger compartment of an automobile to permit relatively stable support of items of food and drink and other small articles.

Some such trays or receptacles have been carried with storage structures known as floor consoles which are positioned between the two front sets of automobiles having bucket seats. Exemplary of such trays and receptacles are those disclosed in US—A—3 356 409 to Belsky et al, US—A—3 110 397 to Peck et al, US—A—3 236 461 and 3 804 233 to Gregg, Jr., and US—A—561 589 to Larkin.

Others have provided for the detachable securing of beverage trays and the like to other passenger compartment structures, such as the seats, as exemplified by US—A—3 338 629 to Drees and US—A—4 146 159 to Hemmen, or to the dashboard as exemplifed by US—A—286 742 to Pellegrino.

US—A—3 356 409 discloses a console mounted between two vehicle bucket-type seats according the prior art portion of claim 1. The console includes a body which is slidable from a position between said sets to a position rearward of said seats.

Among the deficiencies noted in all the prior art devices is that the article-carrying trays have used valuable interior space and usable surfaces in the passenger compartment to perform a function for which demand is intermittent. This deficiency is seen whether the article-carrying trays are included in auxiliary structures which by their nature consume otherwise useful space and surface or are integrally formed on existing structure such as floor consoles.

According to the invention there is provided a console assembly in a vehicle body passenger compartment having a floor for mounting a pair of seats in laterally spaced relationship about a vertical plane through the longitudinal axis of the vehicle body and including means for mounting said console assembly to the floor in the axially extending space defined between the seats, the console assembly comprising an elongated housing means including means adapted to engage said mounting means for securing said console assembly to said floor whereby a portion of the elongated housing means defines an internal storage cavity and includes tray means having at least an upwardly facing flat surface carried in said housing means whereby said tray means is slidingly moveable with respect thereto between a storage position wherein said tray means (18) is substantially enclosed within said housing means storage cavity and an operative position wherein portions of said tray means flat surface are exposed, and latch means operatively disposed between said tray means and said housing means for selectively holding said tray means in said storage position or permitting movement of said tray means to said operative position.

The invention will now be described by way of example with reference to the accompanying drawings in which:

Figure 1 is a perspective view of the improved console of the present invention installed in the passenger compartment of an automobile;

Figure 2 is a side view of the invention console partially sectioned to show its tray in stored and operative positions;

Figure 3 is a top view of the invention console with the tray in its operative position, certain portions removed for clearly showing spring and latch configuration;

Fig. 4 is a top view of the latch of the invention console;

Fig. 5 is a pictorial perspective view of the latch embodied in the invention console showing the relative position of its parts in the latched position;

Fig. 6 is a pictorial perspective view of the parts when the tray is positioned fully inward for unlatching;

Fig. 7 is a pictorial perspective view of the parts as the tray is moved outwardly;

Fig. 8 is a pictorial perspective view of the latch embodied in the invention console showing the relative position of its parts when the outward moving tray is free of the latch; and

Fig. 9 is a pictorial perspective view of the latch embodied in the invention console showing the relative position of its parts as the tray is moved inward to relatch.

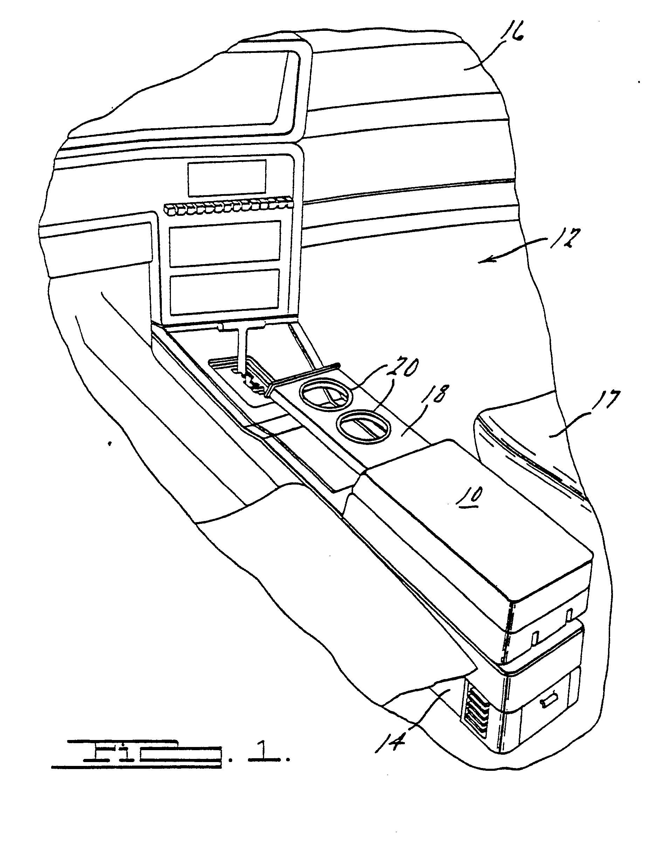

Turning now to the drawings, and in particular to Fig. 1, a floor console 10 is illustrated as being installed in the passenger compartment 12 of a vehicle. The console 10 is secured to a floor portion 14 of the vehicle body and extends axially rearwardly from a position adjacent the dashboard shown in part at 16 between a pair of spaced seats (one indicated at 17). An article-carrying tray member 18 is illustrated in its operative position extending forwardly from the console 10 toward the dashboard 16. A plurality (two shown) of bores 20 may be formed through the tray member 18 for holding beverage containers (not shown) and the like.

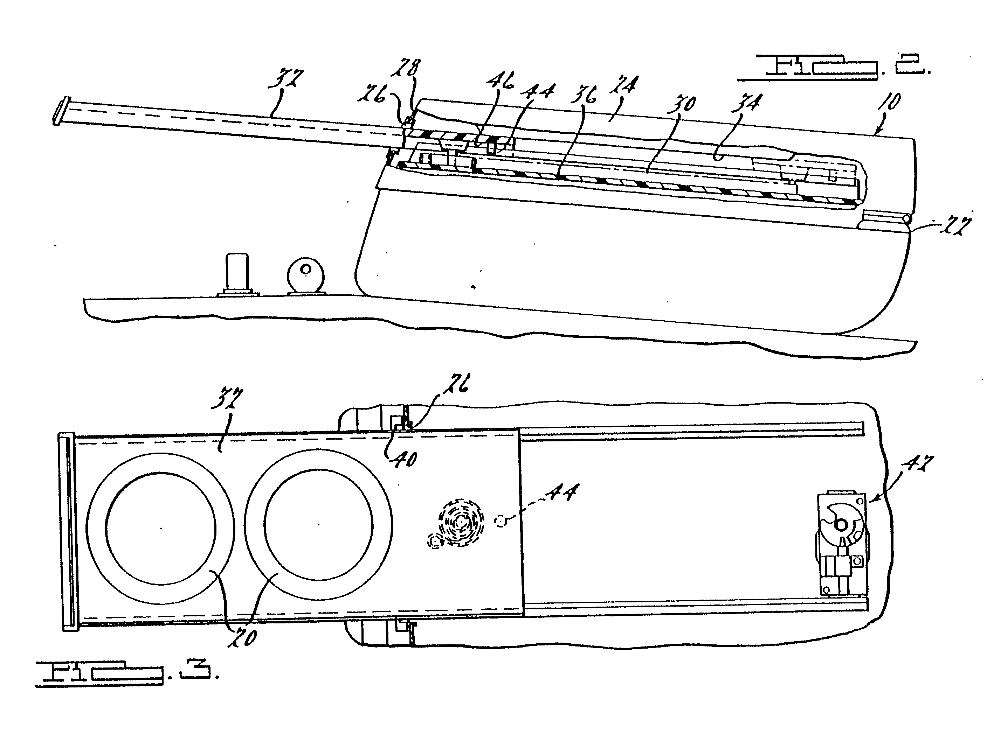

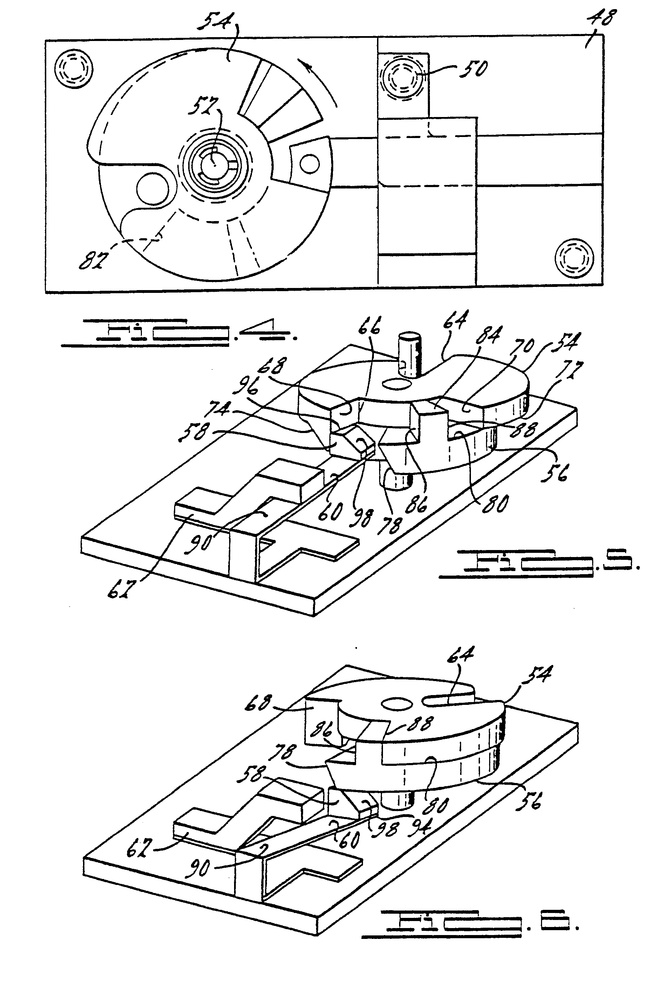

As may best be seen in Figs. 2 and 3, the invention floor console 10 includes a generally box-like housing portion 22 which is preferably held by conventional fastening means such as screws (not shown) to the floor 14 of the vehicle. A generally hollow upper portion 24 includes a generally forwardly facing aperture such as a slot 26 formed through a front wall 28 and defines an internal cavity 30.

The article-carrying tray 18 is preferably formed as a rectangular member having at least a flat, upper surface 32 for supporting articles, which surface may be modified as by the bores 20 for accommodating certain articles. The tray 18 is slidably received through the slot 26 into the cavity 30, its travel being guided between upper and lower internal walls 34, 36, respectively, of the console housing upper portion 24 partially bounding the cavity 30. Lateral guiding of the tray 18 may be effected by provision of a decorative guiding bezel carried within the periphery of the slot 26 and including inwardly extending guide flanges 40.

Because of the described sliding engagement of the tray 18 with the console upper portion 24, the tray 18 may be moved from the operative position shown in Figs. 2 and 3 in which the upper supporting surface 32 is exposed inwardly to a hidden stored position indicated in broken lines at the right side of Fig. 2.

The reverse of this sliding movement is, of course, also possible and is assisted by provision of a helical torsion spring operatively carried between the tray 18 and the console housing 22. The radially outer end of the spring is fixed to an anchor, such as a pin 46, mounted on the bottom wall 36 at an axially forward position; and the radially inner end of the spring is fixed to a pin, which is formed to abut bottom wall 36 for guiding tray 18. It can be seen that inward movement of the tray 18 extends the spring 42 to create an outward restoring force.

It can be appreciated by reference to Figs. 3 et seq. that secure positioning of the tray 18 in its stored position is effected by a latch assembly 42 mounted on bottom wall 36 of console upper portion 24. As will be later described in more detail, the latch assembly 42 cooperates with a pin 44 projecting downwardly from a lower surface of the tray 18 to axially secure the tray 18 within the console 10 upon inward movement to a predetermined axial position and to release the tray 18 for outward movement to its operative position after certain further inward movement.

The latch assembly 42 is illustrated as comprising a base plate 48 fixedly secured to bottom wall 36 as by rivets 50, a pivot pin 52 projecting upwardly from the base plate 48, upper and lower cam members 54 and 56, respectively, relatively rotatably mounted on the pin 52, a locking cam 58, a resilient support 60 to which locking cam 58 is fixed, and a positioning stop 62 for the support 60.

The upper cam 54 and lower cam 56 include peripherally spaced surfaces which cooperate mutually and with the latch pin 44 of the tray 18 to control engagement of the locking cam 58 with the cams 54, 56 upon certain axial movement of the tray 18.

Upper cam 54 is formed as a disc-like member and includes a radially inwardly extending slot 64 configured to receive the actuating pin 44. It is formed to include an open, peripherally extending sector 66 bounded by first and second flat, preferably vertical surfaces 68, 70, respectively. It will be noted that first vertical surface 68 projects downwardly below the plane of an annular bottom surface 72 of upper cam 54, and a canted cam surface 74 extends therefrom to the bottom surface 72.

Lower cam 56 is similarly formed as a disc-like member including an open sector bounded on one end by a cam surface 78, preferably canted identical with cam surface 74, extending generally downwardly from the cam member upper surface 80 which abuts bottom surface 72 of upper cam 54. It is bounded on the other end by a vertical surface 82. An upstanding dog 84 projects from the upper surface 80 into the open sector 66 of upper cam 54. Radially extending side surfaces 86, 88 are formed on the dog 84 complementary with surfaces 68, 70, respectively, of upper cam 54.

The resilient support 60 is preferably formed from a strip of resilient material, such as spring steel, as a generally U-shaped member fixed to the base plate 48 and including an arm 90 extending radially inwardly toward the axis of pivot pin 52 to position locking cam 58 within the common periphery of upper and lower cams 54, 56. Upward travel of the arm 90 is limited by abutment with an overhanging portion of position stop 62, which is also fixed to the base plate 48.

Locking cam 58 is formed as a block fixedly carried at or near the inward end 94 of resilient support 60 and includes a preferably vertical surface 96 complementary with surface 68 of upper cam 54 and a cam surface 98 complementary with surface 78 of lower cam 56.

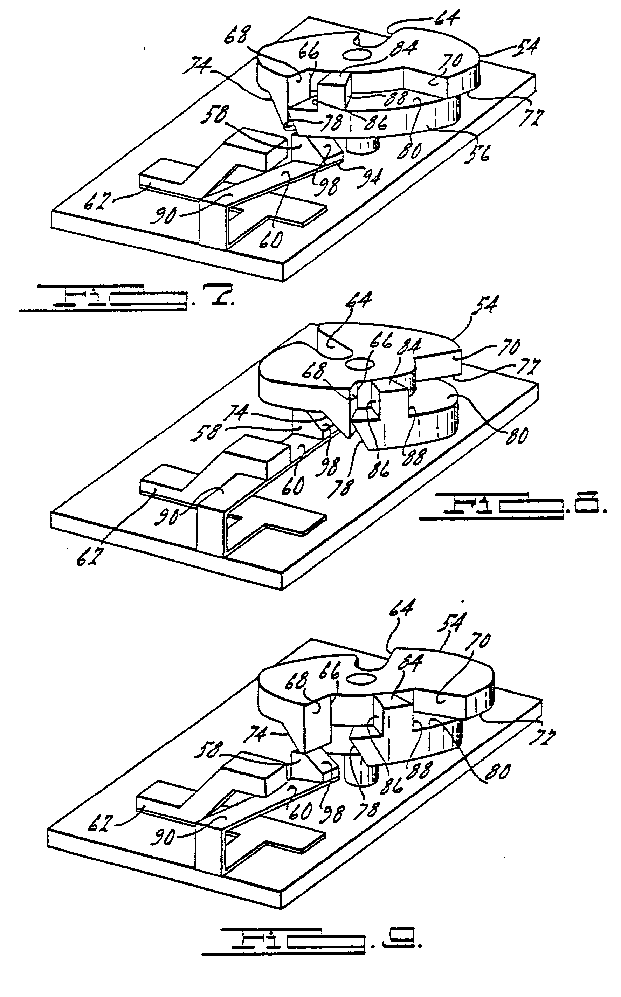

Operation of the latch assembly 42 of the invention console 10 can be clearly seen in Figs. 5—9. In the latched position shown in Fig. 5 inward movement of the tray 18 causes engagement of the latch pin 44 in the slot 64 of upper cam member 54 to rotate the cam member 54 to the position shown wherein the open sectors 66, 76 register and the locking cam 58 is in its full upward position. Outward movement of the tray 18 is resisted since the flat surface 96 of locking cam 58 is thereby abuttingly engaged by surface 68 of upper cam member 54.

Upon further inward movement of the tray 18, the latch pin 44 further rotates the upper cam member 54 to the position shown in Fig. 6 as surface 70 of upper cam member 54 engages surface 88 of lower cam dog 84 to rotate lower cam member 56 for engagement of complementary canted surfaces 78 of lower cam member 56 and 98 of locking cam 58. This depresses the arm 90 of support 62, disengaging the locking cam 58 and permitting forward movement of the tray 18 through counterrotation of the upper cam member 54 as seen in Fig. 1. The extent of inward movement of the tray 18 is limited by provision of an upstanding stop projection 49 of base plate 48 which limits rotation of the lower cam 56 as may best be seen in Fig. 4.

As the tray moves sufficiently forward so that the pin 44 leaves the slot 64, surface 68 urges the lower cam member 56 to the position shown in Fig. 8 releasing the locking cam 58 to its full upward position beneath upper cam member 54.

Subsequent inward movement of the tray to a position wherein pin 44 again engages slot 64 rotates the upper cam member 54 to slide canted surface 74 of upper cam member 54 against canted surface 98 of locking cam 58 to depress the arm 90 as shown in Fig. 9 until the latched position of Fig. 5 is again reached.

## Claims

1. A console assembly (10) in a vehicle body passenger compartment having a floor for mounting a pair of seats in laterally spaced relationship about a vertical plane through the longitudinal axis of the vehicle body and including means for mounting said console assembly (10) to the floor in the axially extending space defined between the seats (17) the console assembly (10) comprising an elongated housing means (22) including means adapted to engage said mounting means for securing said console assembly to said floor whereby a portion (24) of the elongated housing means (22) defines an internal storage cavity (30) and includes tray means (18) having at least an upwardly facing flat surface (32) carried in said housing means (22) characterized in that said tray means (18) is slidingly moveable with respect thereto between a storage position wherein said tray means (18) is substantially enclosed within said housing means storage cavity (30) and an operative position wherein portions of said tray means flat surface (32) are exposed, and latch means (42) operatively disposed between said tray means (18) and said housing means (22) for selectively holding said tray means (18) in said storage position or permitting movement of said tray means (18) to said operative position.

2. A console assembly as claimed in Claim 1, characterized by including spring means operatively disposed between said tray means (18) and said housing means (22) to urge said tray means (18) toward said operative position.

3. A console assembly as claimed in Claim 2, characterized in that said spring means comprises a helical torsion spring having one end thereof fixed to said housing means (22) and the other end thereof fixed to said tray means (18).

4. A console assembly as claimed in any one of Claims 1 to 3, characterized in that said latch means (42) comprises cam means (54, 56) mounted for rotative movement on said housing means (22), latching pin means (44) fixed to said tray means (18) for axial movement therewith and engageable with said cam means (54, 56) to effect rotative movement thereof, and locking cam means (58) resiliently mounted on said housing means (22) and selectively moveable in response to predetermined rotative movements of said cam means (54, 56) to prevent or permit further rotative movement of said cam means (54, 56) in the rotative direction effecting movement of said tray means (18) to said operative position.

5. A console assembly as claimed in any one of Claims 1 to 3, characterized in that said latch means (42) comprises a first substantially disc-like cam means (54) mounted for rotation on said housing means (22) about an axis normal to the plane of said tray means (18) and including means defining a peripherally extending open sector therein, a second substantially disc-like cam means (56) having an end face slidingly abuttingly engaging an end face of said first cam means (54), mounted for relative rotational movement with respect thereto about said axis, and including means defining a peripherally extending open sector therein and means defining a through slot (64) extending radially inwardly from the outer periphery thereof, means defining a projection extending from said first cam end face into said second cam open section, and locking cam means (58), means (90) for resiliently supporting said locking cam means (58) adjacent said first and second cam means axis on said housing means (22) and for biasing said locking cam means (58) toward said first and second cam means (54, 56) and latching pin means (44) fixed to said tray means (18) and engageable with said second cam through a slot (64) to effect rotation of said second cam means in response to axial movement of said tray means (18), thereby effecting selective relative rotation of said first and second cam means between a position wherein said locking cam means (58) engages said first and second cam means open sectors to prevent certain movement of said tray means (18) and positions wherein said locking cam means (58) is disengaged from said open sectors and said certain movement is permitted.

6. A console assembly as claimed in any one of Claims 1 to 3, characterized in that said latch meaans (42) comprises first and second disc-like cam means each having means defining peripherally extending open sector thereof mounted for relative rotary movement on said housing means (22) and latch pin means (44) carried for axial movement with said tray means (18) engageable with portions of one of said cam means to effect selective relative movement between said first and second cam means between positions wherein portions of said open sectors of said cam means are in axial registration and positions wherein said open sectors are arcuately displaced.

7. A console assembly as claimed in Claim 6, characterized in that said latch means (42) includes locking cam means mounted on said housing means (22) and biased toward said cam means to be lockingly inserted into said open sectors in said position of axial registration.

## Patentansprüche

1. Eine Konsoleneinheit (10) in einer Kfz-Fahrgastzelle, die eine Bodenplatte zur Montage von zwei Sitzen, die im Verhältnis zur Längsachse der Karosserie in einer vertikalen Ebene mit Abstand zueinander angeordnet sind, und Vorrichtungen zur Befestigung der genannten Konsoleneinheit (10) an der Bodenplatte in dem zwischen den Sitzen (17) in achsialer Richtung festgelegten Raum umfaßt, wobei die Konsoleneinheit (10) eine länglich ausgeführte Gehäusevorrichtung (22) mit Vorrichtungen umfaßt, die so ausgebildet sind, daß sie in die genannten Montagevorrichtungen zur Befestigung der genannten Konsoleneinheit an der Bodenplatte eingreifen, wobei ein Abschnitt (24) der länglichen Gehäusevorrichtung (22) einen innenliegenden Stauraum (30) festlegt, der ein Ablagefach (18) umfaßt, das zumindest eine nach oben weisende, flach ausgebildete Oberseite (32) besitzt, die in der genannten Gehäusevorrichtung (22) getragen wird, dadurch gekennzeichnet, daß das genannte Ablagefach (18) im Verhältnis dazu zwischen einer Ablageposition, in der das genannte Ablagefach (18) im wesentlichen innerhalb des genannten Stauraums (30) der Gehäusevorrichtung ruht, und einer Befüllposition, in der Abschnitte der genannten flach ausgebildeten Oberseite (32) des Ablagefachs frei zugänglich sind, gleitend bewegbar ist, und daß eine Verriegelungsvorrichtung (42) zwischen dem genannten Ablagefach (18) und der genannten Gehäusevorrichtung (22) vorgesehen ist, um das genannte Ablagefach (18) wahlweise in der gennannten Ablageposition zu halten oder eine Bewegung des genannten Ablagefachs (18) in die genannte Befüllposition zu ermöglichen.

2. Eine Konsoleneinheit gemäß Anspruch 1, dadurch gekennzeichnet, daß eine Federvorrichtung zwischen dem genannten Ablagefach (18) und der genannten Gehäusevorrichtung (22) vorgesehen ist, um das genannte Ablagefach (18) in die genannte Befüllposition zu drücken.

3. Eine Konsoleneinheit gemäß Anspruch 2, dadurch gekennzeichnet, daß die gennante Federvorrichtung eine spiralförmige Torsionsfeder umfaßt, wobei das eine Ende dieser Feder an der genannten Gehäusevorrichtung (22) und das andere Ende an dem genannten Ablagefach (18) befestigt ist.

4. Eine Konsoleneinheit gemäß irgendeinem der Ansprüche 1 bis 3, dadurch gekennzeichnet, daß die genannte Verriegelungsvorrichtung (42) Nockenvorrichtungen (54, 56) umfaßt, die vorgesehen sind, um eine drehende Bewegung an der genannten Gehäusevorrichtung (22) zu ermöglichen, eine Verriegelungsstiftvorrichtung (44) an dem genannten Ablagefach (18) zur Durchführung einer gemeinsamen Axialbewegung und zum Eingriff in die genannten Nockenvorrichtungen (54, 56) zwecks Ermöglichung einer drehenden Bewegung vorgesehen ist, und daß eine Verriegelungsnockenvorrichtung (58) elastisch an der genannten Gehäusevorrichtung (22) befestigt und wahlweise als Reaktion auf vorbestimmte Drehbewegungen der genannten Nockenvorrichtungen (54, 56) bewegbar ist, um eine weitere drehende Bewegung der genannten Nockenvorrichtungen (54, 56) in Drehrichtung zu unterbinden oder zu ermöglichen, um so eine Bewegung des genannten Ablagefachs (18) in die genannte Befüllposition zu bewirken.

5. Eine Konsoleneinheit gemäß irgendeinem der Ansprüche 1 bis 3, dadurch gekennzeichnet, daß die genannte Verriegelungsvorrichtung (42) eine erste im wesentlichen scheibenförmige Nokkenvorrichtung (54), die zwecks Drehung an der genannten Gehäusevorrichtung (22) um eine Achse vorgesehen ist, die normal zur Ebene des genannten Ablagefachs (18) verläuft, und eine Vorrichtung, die darin einen an der Außenseite befindlichen offenen Abschnitt festlegt, eine zweite im wesentlichen scheibenförmige Nockenvorrichtung (56) mit einer Endfläche, die in gleitender Weise in stumpfen Eingriff zu einer Endfläche der genannten ersten Nockenvorrichtung (54) steht, umfaßt, wobei die Montage so ausgeführt ist, daß im Verhältnis dazu eine drehende Bewegung um die genannte Achse erfolgen kann, weiterhin eine Vorrichtung, die darin einen an der Außenseite befindlichen offenen Abschnitt festleg, und eine Vorrichtung zur Festlegung eines durchgehenden Schlitzes (64), der sich vom äußeren Umfang aus radial nach innen erstreckt, eine Vorrichtung zur Festlegung eines Vorsprungs, der sich von der Endfläche der genannten ersten Nockenvortung bis in den offenen Abschnitt der genannten zweiten Nockenvorrichtung erstreckt, sowie eine Verriegelungsnockenvorrichtung (58), eine Vorrichtung (90) zur elastischen Abstützung der genannten Verriegelungsnockenvorrichtung (58) in unmittelbarer Nähe der genannten ersten und zweiten Nockenvorrichtungsachse an der genannten Gehäusevorrichtung (22) und zur Vorspannung der genannten Verriegelungsnockenvorrichtung (58) in Richtung auf die genannten ersten und zweiten Nockenvorrichtungen (54, 56) sowie eine Verriegelungsstiftvorrichtung (44), die an dem genannten Ablagefach (18) befestigt ist und in den durchgehenden Schlitz (64) der genannten zweiten Nockenvorrichtung eingreifen kann, um eine Drehung der genannten zweiten Nockenvorrichtung als Reaktion auf die Axialbewegung des genannten Ablagefachs (18) zu bewirken, wodurch wahlweise eine relative Drehbewegung der genannten ersten und zweiten Nockenvorrichtung zwischen einer Position, in der die genannte Verriegelungsnockenvorrichtung (58) in die offenen Abschnitte der genannten ersten und zweiten Nockenvorrichtungen eingreift, um eine bestimmte Bewegung des genannten Ablagefachs (18) zu unterbinden, und Positionen, in denen die genannte Verriegelungsnockenvortung (58) von den genannten offenen Abschnitten gelöst und die genannte bestimmte Bewegung möglich ist, durchgeführt werden kann.

6. Eine Konsoleneinheit gemäß irgendeinem der Ansprüche 1 bis 3, dadurch gekennzeichnet, daß die genannte Verriegelungsvorrichtung (42) erste und zweite scheibenförmige Nockenvortungen umfaßt, die jeweils eine Vorrichtung besitzen, um darin einen an der Außenseite befindlichen offenen Abschnitt festzulegen, wobei die Montage so ausgeführt ist, daß im Verhältnis dazu eine drehende Bewegung an der genannten Gehäusevorrichtung (22) durchgeführt werden kann, und eine Verriegelungsstiftvorrichtung (54) vorgesehen ist, um eine Axialbewegung mit dem genannten Ablagefach (18) und einen Eingriff in Abschnitte einer der genannten Nockenvorrichtungen zu ermöglichen, um so wahlweise eine entsprechende Bewegung zwischen den genannten ersten und zweiten Nockenvorrichtungen zwischen Positionen, in denen sich Abschnitte der genannten offenen Abschnitte der genannten Nokkenvorrichtung in axialer Ausrichtung befinden, und Positionen, in denen die genannten offenen Abschnitte bogenförmig versetzt sind, durchführen zu können.

7. Eine Konsoleneinheit gemäß Anspruch 6, dadurch gekennzeichnet, daß die genannten Verriegelungsvorrichtung (42) eine Verriegelungsnockenvorrichtung umfaßt, die an der genannten Gehäusevorrichtung (22) montiert und zur genannten Nockenvorrichtung vorgespannt ist, um so in verriegelnder Form in der genannten Position der axialen Ausrichtung in die genannten offenen Abschnitte eingreifen zu können.

**Revendications**

1. Ensemble de console (10) situé dans un habitacle de carrosserie de véhicule comprenant un plancher sur lequel deux sièges sont montés dans des positions espacées latéralement de part et d'autre d'un plan vertical qui contient l'axe longitudinal de la carrosserie du véhicule et comprenant des moyens permettant de monter ledit ensemble de console (10) sur le plancher dans un espace qui s'étend axialement et défini entre les sièges (17), l'ensemble de console (10) comprenant des moyens de forme allongée formant boîtier (22), qui comprennent des moyens adaptés pour attaquer lesdits moyens de montage pour fixer ledit ensemble de console audit plancher, grâce à quoi, une partie (24) des moyens de forme allongée formant boîtier (22) définit une cavité de rangement intérieure (30) et renferme des moyens formant plateau (18) ayant au moins une surface plate (22) qui regarde vers le haut, logés dans lesdits moyens formant boîtier (22), caractérisé en ce que lesdits moyens formant plateau peuvent se déplacer par coulissement par rapport à ces moyens, entre une position rangée dans laquelle lesdits moyens formant plateau (18) sont à peu près entièrement enfermés dans ladite cavité (30) de rangement des moyens formant boîtier et une position active, dans laquelle des parties de ladite surface plate des moyens formant plateau sont apparentés et en ce que des moyens de verrouillage (42) étant interposés fonctionnellement entre lesdits moyens (18) formant plateau et lesdits moyens (22) formant boîtier pour retenir sélectivement lesdits moyens (18) formant plateau dans ladite position rangée ou pour permettre auxdits moyens (18) formant plateau de prendre ladite position active.

2. Ensemble console selon la revendication 1, caractérisé en ce qu'il comprend des moyens élastiques intercalés fonctionnellement entre lesdits moyens formant plateau (18) et lesdits moyens formant boîtier (22) pour tendre à placer lesdits moyens formant plateau (18) dans ladite position active.

3. Ensemble console selon la revendication 2, caractérisé en ce que lesdits moyens élastiques comprennent un ressort de torsion hélicoïdal dont une extrémité est fixée auxdits moyens (22) formant boîtier, tandis que l'autre extrémité est fixée auxdits moyens formant plateau (18).

4. Ensemble console selon l'une quelconque des revendications 1 à 3, caractérisé en ce que lesdits moyens de verrouillage (42) comprennent des moyens formant cames (54, 56) montés pour tourner sur lesdits moyens formant boîtier (22), des moyens (44) formant doigt de verrouillage fixés auxdits moyens formant plateau (18) pour se déplacer axialement avec ceux-ci et pouvant être mis en prise avec lesdits moyens formant cames (54, 56), pour faire tourner ces moyens, et des moyens formant came de verrouillage (58) montés élastiquement sur lesdits moyens formant boîtier (22) et qui peuvent se déplacer sélectivement, en réponse à des mouvements de rotation prédéterminés desdits moyens formant cames (54, 56) pour s'opposer à la poursuite du mouvement de rotation desdits moyens formant cames (54, 56) dans le sens de rotation qui détermine l'amenée desdits moyens formant plateau (18) dans ladite position active ou pour permettre cette poursuite du mouvement de rotation desdits moyens formant cames.

5. Ensemble console selon l'une quelconque des revendications 1 à 3, caractérisé en ce que lesdits moyen de verrouillage (42) comprennent une première came (54) à peu près en forme de disque, montée, pour tourner, sur lesdits moyens formant boîtier (22) autour d'un axe perpendiculaire au plan desdits moyens formant plateau (18) et comprenant des moyens qui y définissent un secteur ouvert s'étendant selon la périphérie, une deuxième came (56) à peu près en forme de disque, présentant une surface d'extrémité qui est en appui avec possibilité de glissement contre une face d'extrémité de ladite première came (54) montée pour décrire un mouvement de rotation relative par rapport à cette première came, autour dudit axe, et comprenant des moyens qui y définissent un secteur ouvert s'étendant selon la périphérie, et des moyens qui définissent une encoche traversante (64) qui s'étend radialement vers l'intérieur de cette came à partir de sa périphérie extérieure, des moyens qui définissent une protubérance qui fait saillie sur ladite face d'extrémité de la première came et s'engage dans ledit secteur ouvert de la deuxième came, et des moyens formant came de verrouillage (58), des moyens (90) destinés à supporter élastiquement lesdits moyens formant came de verrouillage (58) à proximité dudit axe de la première came et de la deuxième came, en prenant appui sur lesdits moyens formant boîtier (22) et à solliciter lesdits moyens formant came de verrouillage (58) vers ladite première et ladite deuxième cames (54, 56), et des moyens formant doigt de verrouillage (44), fixés audit moyens formant plateau (18) et qui peuvent être mis en prise avec ladite encoche traversante (64) de la première came, pour déterminer une rotation de ladite première came en réponse au déplacement axial desdits moyens formant plateau (18), en déterminant de cette façon, une rotation relative sélective de ladite première came et de ladite deuxième came entre une position dans laquelle lesdits moyens formant came de verrouillage (58) entrent en prise avec les secteurs ouverts de la première came et de la deuxième came pour s'opposer à un certain mouvement desdits moyens formant plateau (18) et des positions dans lesquelles lesdits moyens formant came de verrouillage (58) sont dégagés desdits secteurs ouverts et où ledit certain mouvement est permis.

avec les secteurs ouverts de la première came et de la deuxième came pour s'opposer à un certain mouvement desdits moyens formant plateau (18) et des positions dans lesquelles lesdits moyens formant came de verrouillage (58) sont dégagés desdits secteurs ouverts et où ledit certain mouvement est permis.

6. Ensemble console selon l'une quelconque des revendications 1 à 3, caractérisé en ce que lesdits moyens de verrouillage (42) comprennent une première et une deuxième cames en forme de disque dont chacune possède des moyens définissant un secteur ouvert de cette came qui s'étend selon sa périphérie, ces cames étant montées pour décrire un mouvement de rotation relative sur lesdits moyens formant boîtier (22) et des moyens formant doigt de verrouillage (44), supportés pour décrire un mouvement axial conjointement avec lesdits moyens formant plateau (18) et qui peuvent être mis en prise avec des parties de l'une desdites cames pour déterminer un déplacement relatif sélectif entre ladite première came et ladite deuxième came, entre des positions dans lesquelles des parties desdits secteurs ouverts desdites cames sont en coïncidence axiale et des positions dans lesquelles lesdits secteurs ouverts sont décalés angulairement.

7. Ensemble console selon la revendication 6, caractérisé en ce que lesdits moyens de verrouillage (42) comprennent des moyens formant came de verrouillage montés sur lesdits moyens formant boîtier (22) et sollicités en direction desdites cames pour s'insérer dans lesdits secteurs ouverts, en établissant un verrouillage dans ladite position de coïncidence axiale.

FIG. 1.

0 105 252

FIG. 2.

FIG. 3.

2

FIG. 4.

FIG. 5.

FIG. 6.

FIG. 7.

FIG. 8.

FIG. 9.

4